# EUROPÄISCHE PATENTSCHRIFT

(11) **EP 2 949 969 B1**
(45) Veröffentlichungstag und Bekanntmachung des Hinweises auf die Patenterteilung: **08.08.2018**
(21) Anmeldenummer: 15168882.7
(22) Anmeldetag: 22.05.2015
(51) Int. Cl.: F16H 57/04, F16H 55/06, F16H 55/17, B22D 19/00

(54) **SCHMIERRITZELMODUL, SCHMIERRITZEL UND VERFAHREN ZUM HERSTELLEN EINES SCHMIERRITZELMODULS**
LUBRICATING PINION MODULE, LUBRICATING PINION AND METHOD FOR PRODUCING A LUBRICATING PINION MODULE
MODULE DE PIGNON DE LUBRIFICATION, PIGNON DE LUBRIFICATION ET PROCÉDÉ DE FABRICATION D'UN MODULE DE PIGNON DE LUBRIFICATION

(30) Priorität: 28.05.2014 DE 102014210246
(43) Veröffentlichungstag der Anmeldung: 02.12.2015
(73) Patentinhaber: SKF Lubrication Systems Germany GmbH, 69190 Walldorf (DE)
(72) Erfinder: Schoenfeld, Andreas, 68789 St. Leon-Rot (DE); Beisel, Daniel, 76709 Kronau (DE); Kreutzkämper, Jürgen, 74915 Waibstadt-Daisbach (DE)
(74) Vertreter: Kuhstrebe, Jochen

(56) Entgegenhaltungen:
- DE-A1- 10 127 224
- JP-A- H06 341 509

## Beschreibung

Vorliegende Erfindung betrifft ein Schmierritzelmodul, insbesondere für eine Schmiereinrichtung, zum Aufbringen eines Schmiermittels auf ein zu schmierendes Element, insbesondere auf ein Zahnrad, wobei das Schmierritzelmodul ein Verzahnungselement und ein Lagerelement aufweist, ein Schmierritzel mit mindestens einem derartigen Schmierritzelmodul, sowie ein Verfahren zum Herstellen eines derartigen Schmierritzelmoduls.

Aus der JP H06 341509 A ist ein Schmierritzelmodul nach dem Oberbegriff des Anspruchs 1 bekannt. Aus dem Stand der Technik, beispielsweise der DE 10201004475 7 oder der DE 202007001440 U1 sind Schmierritzelmodule bekannt, die einen auf einer Lagerbuchse angeordneten Verzahnungsbereich aus Schaumstoff aufweisen. Dabei wird Schmiermittel aus dem Inneren der Lagerbuchse oder einem zwischen Lagerbuchse und Verzahnungselement angeordnetem Schmiermittelreservoir an das aus Schaumstoff bestehende Verzahnungselement abgegeben und darin gespeichert. Dadurch kann Schmiermittel aus dem Verzahnungselement an ein zu schmierendes Element, insbesondere an ein mit dem Schmierritzelmodul kämmendes Zahnrad, gleichmäßig abgegeben werden.
Nachteilig bei diesem Stand der Technik ist jedoch, dass das Schmiermittel immer in dem gesamten aus Schaumstoff bestehenden Verzahnungsbereich vorhanden ist, so dass Schmiermittel auch an Stellen bereitgestellt wird, die keiner Schmierung bedürfen. Ein weiteres Problem ist, dass sich üblicherweise das eingesetzte Schmiermittel aufgrund von Umgebungs- bzw. Einsatztemperaturen in seiner Fluidität ändert. So kann beispielsweise das eingesetzte Schmiermittel bei Minustemperaturen sehr steif werden, so dass sich das Schmiermittel bei Minusgraden aufgrund seiner Steifigkeit nicht mehr aus dem Schaumstoff ausbringen lässt und das Schaumstoffritzel insgesamt verhärtet. Bei Plusgraden dagegen kann das eingesetzte Schmiermittel zu dünn werden, wodurch zu viel Schmiermittel an den zu schmierenden Elementen bereitgestellt wird.

Ist das Schmierritzelmodul dagegen nicht aus Schaumstoff gefertigt, so sind üblicherweise Schmiermittelkanäle in dem Schmierritzelmodul vorgesehen, die Schmiermittel aus Achsnähe des Schmiermittels nach radial außen fördern. Derartige Schmierritzelmodule sind üblicherweise ohne Lagerbuchse ausgebildet, da sie in sich stabil auf einer Welle rotieren können. Eine besonders einfache Ausgestaltung eines derartigen Schmierritzelmoduls ist in der WO 2008113396 dargestellt, bei der das Schmierritzelmodul aus zwei Schmierritzelmodulteilen besteht, die entlang einer Teilungsebene miteinander verbindbar sind, wobei in der Teilungsebene mindestens ein Schmiermittelkanal verläuft. Der Schmiermittelkanal wird dabei aus zwei Schmiermittelkanalhälften gebildet, wobei die Schmiermittelkanalhälften in den jeweiligen Schmierritzelmodulteilen an der entsprechenden Teilungsebene ausgebildet sind. Dadurch können, wenn beide Schmierritzelmodule miteinander verbunden sind, diese Schmiermittelkanalhälften die Schmiermittelkanäle ausbilden, wodurch eine besonders einfache Herstellung der Schmiermittelkanäle bereitgestellt wird. Dazu werden die Schmierritzelmodulteile üblicherweise über Stützhülsen, Schrauben und Scheiben zusammengesetzt, wobei in den äußeren Schmierritzelmodulteilen eingesetzte Scheiben derart ausgeführt sind, dass sich die Ritzelteile beim Einsetzen der Scheiben konisch verformen. Durch das Verschrauben der Ritzelteile wird dann das Schmierritzelmodul wieder in eine parallele Ausgangsform gebracht, und ein Abdichten der Schmierritzelmodulteile in der Teilungsebene erreicht.

Nachteilig bei den bekannten Schmierritzelmodulen ist jedoch, dass zum einen bei der zweiteiligen Ausführung die Abdichtung zwischen den Teilen sehr aufwändig ist, da die abzudichtende Fläche teilweise sehr groß sein kann und die zusätzlich benötigen Stützhülsen, Scheiben und Schrauben exakt aufeinander abgestimmt werden müssen. Eine derart aufwändige Abdichtung ist jedoch nötig, da bei einer ungenügenden Abdichtung zwischen den Elementen Schmiermittel in die Teilungsebene eindringen könnte, aus der das Schmiermittel unkontrolliert und ungebraucht in die Umwelt austreten könnte.

Ein weiteres Problem bei den aus dem Stand der Technik bekannten Schmierritzelmodulen ist, dass die Schmierritzelmodule nur bis zu einer bestimmten Drehzahl eingesetzt werden können. Bei schneller rotierenden Schmierritzelmodulen entsteht eine große Reibung an der das Schmierritzelmodul aufnehmenden Welle oder an dem zu schmierenden Element, was zu einem großen Temperaturanstieg führen kann. Dies kann im Zusammenhang mit bestimmten Schmiermitteln zu einem Zersetzen des Schmierritzelmoduls führen.

Aufgabe vorliegender Erfindung ist es deshalb, ein Schmierritzelmodul bereitzustellen, das zuverlässig Schmiermittel über einen großen Temperaturbereich an ein zu schmierendes Element führen kann und auch bei schnellen Drehzahlen einsetzbar ist.

Diese Aufgabe wird durch ein Schmierritzelmodul gemäß Patentanspruch 1, sowie ein Schmierritzel gemäß Patentanspruch 10, gelöst.

Erfmdungsgemäß wird ein Schmierritzelmodul, insbesondere für eine Schmiereinrichtung, zum Aufbringen eines Schmiermittels auf ein zu schmierendes Element, insbesondere ein Zahnrad bereitgestellt, wobei das Schmierritzelmodul ein Verzahnungselement und ein Lagerelement aufweist. Dabei ist das Verzahnungselement dazu ausgelegt, das zu schmierende Element mit Schmierstoff zu versorgen, während das Lagerelement dazu ausgelegt ist, das Schmierritzelmodul auf einer vorzugsweise feststehenden Welle zu lagern. Dabei basiert vorliegende Erfindung auf der Idee, das Lagerelement und das Verzahnungselement drehfest, insbesondere formschlüssig, miteinander zu verbinden. Da Lagerelement und Verzahnungselement drehfest miteinander verbunden sind, kann keine oder nur ein unwesentliche Relativbewegung zwischen Verzahnungselement und Lagerelement stattfinden, wodurch wiederum Lagerelement und Verzahnungselement eine definierte Position zueinander einnehmen. Diese definierte Position erlaubt die vorzugsweise Ausbildung eines durchgängig ausgebildeten Schmiermittelkanals von einem Schmiermittelzufuhreinlass in Umgebung einer Achse bis einem Schmiermittelauslass in Umgebung des Verzahnungselements, da die definierte Position eine Sperrstellung, also eine Stellung in der kein Schmiermittel aus der Achse in Richtung Verzahnungselement gefördert werden kann, verhindert. Über die erfindungsgemäße formschlüssige Verbindung zwischen dem Lagerelement und dem Verzahnungselement kann zudem ein Schmierritzelmodul bereitgestellt werden, das zum einen mit einer höheren Drehzahl betrieben werden kann, und zum anderen keine zusätzlichen Abdichtelemente mehr benötigt, um eine Dichtigkeit auch über einen großen Temperaturbereich des Schmiermittels bereitzustellen.

Gemäß einem weiteren vorteilhaften Ausführungsbeispiel ist das Lagerelement über ein Gussverfahren, ein Spritzverfahren oder ein Spritzgussverfahren in das Verzahnungselement eingegossen. Dadurch kann eine drehfeste Verbindung zwischen dem Lagerelement und dem Verzahnungselement bereitgestellt werden, die einfach und schnell bereitstellbar ist.

Weiterhin kann durch das Eingießen des Lagerelements beim Herstellungsprozess des Verzahnungselements eine besonders gute Abdichtung zwischen Lagerelement und Verzahnungselement bereitgestellt werden, so dass zum einen das Verzahnungselement mit dem Lagerelement fest verbunden ist und zum anderen ein deutlich höherer Systemdruck auf das Schmierritzelmodul ausübbar ist. Weiterhin kann dadurch sichergestellt werden, dass keine weiteren Dichtelemente, wie beispielsweise Dichtringe, verwendet werden müssen, um eine Abdichtung zwischen Lagerelement und Verzahnungselement bereitzustellen.

Weiterhin weist das Lagerelement mindestens eine, vorzugsweise mehrere Aussparungen auf, in die ein Material des Verzahnungselements für die Ausbildung des Formschlusses aufnehmbar ist. Dabei kann die Aussparung als Bohrung oder auch als umlaufende Nut ausgebildet sein. Eine als Bohrung ausgebildete Aussparung hat den Vorteil, dass sie einer Relativverdrehung zwischen Verzahnungselement und Lagerelement entgegenwirkt. Eine als Nut ausgebildete Aussparung dagegen ermöglicht eine Abdichtung zwischen Lagerelement und Verzahnungselement. Dabei ist insbesondere vorteilhaft, wenn die mindestens eine Aussparung während der Herstellung des Verzahnungselements aus einem fluiden Material formschlüssig mit dem für die Herstellung des Verzahnungselements verwendeten Materials gefüllt wird.

Gemäß einem weiteren vorteilhaften Ausführungsbeispiel ist das Verzahnungselement einstückig ausgebildet und weist vorzugsweise mindestens eine Verzahnung mit einem Zahnkopf und zwei den Zahnkopf umfänglich begrenzenden Zahnflanken auf. Innerhalb des Verzahnungselements ist weiterhin mindestens ein, vorzugsweise zwei, im wesentlichen radial verlaufender Schmiermittelkanal ausgebildet, der vorzugsweise einen in der Zahnflanke ausgebildeten Schmiermittelauslass aufweist. Vorzugsweise wird dieser Schmiermittelkanal bereits während des formschlüssigen Verbindens, insbesondere während des Guß-, Spritz- oder Spritzgußverfahrens, ausgebildet. Dadurch entsteht ein ausgeformter Schmiermittelkanal, der weder über eine nachgearbeitete Bohrung noch über einen Zusammenbau hergestellt werden muss. Dies hat den Vorteil, dass zum Abdichten des Schmiermittelkanals kein weiteres Schmierritzelmodul nötig ist, da der Schmiermittelkanal von Anfang, insbesondere einem Innendurchmesser des Ritzels, bis zu seinem Ende, insbesondere seinem Austritt an der Zahnflanke, in sich geschlossen ist.

Dabei ist insbesondere bevorzugt, wenn der Kanal einen runden Querschnitt aufweist. Weiterhin kann der Schmiermittelkanal derart ausgebildet sein, dass er in Richtung Zahnkopf konisch ausgebildet ist. Dadurch kann sichergestellt werden, dass ein für die Ausbildung des Schmiermittelkanals benötigter Platzhalter nach dem Herstellungsverfahren des Verzahnungselements, insbesondere nach dem Guss-, Spritz-, oder Spritzgussverfahrens, leicht von dem Verzahnungselement getrennt werden kann, um den Schmiermittelkanal freizugeben.

Weiterhin ist vorgesehen, dass nicht nur ein Schmiermittelkanal im Verzahnungselement ausgebildet ist, sondern an jeder Zahnflanke des Verzahnungselements mindestens ein Schmiermittelkanal endet. Dadurch, dass jede Zahnflanke mindestens einen Schmiermittelkanal aufweist, ist eine besonders gute und gleichmäßige Schmiermittelverteilung gewährleistet.

Gemäß einem weiteren vorteilhaften Ausführungsbeispiel ist das Verzahnungselement aus einem in fluider Form, insbesondere mittels eines Gussverfahrens, eines Spritzverfahrens oder eines Spritzgussverfahrens verarbeitbaren Material, insbesondere einem Kunststoff, vorzugsweise Polyurethan, hergestellt. Dadurch, dass das Verzahnungselement aus einem in fluider Form verarbeitbaren Material hergestellt ist, kann der Herstellungsprozess des Schmierritzelmoduls insgesamt deutlich vereinfacht werden. Insbesondere können dann die Schmiermittelkanäle direkt während der Herstellung des Verzahnungselements ausgebildet werden und müssen nicht mehr, wie sonst im Stand der Technik durch ein Nachbearbeiten des Schmierritzelmoduls gebohrt oder über ein Zusammenschrauben von Schmierritzelmodulteilen ausgebildet werden. Dadurch können die Schmiermittelkanäle präzise und einfach gefertigt werden.

Gemäß einem weiteren vorteilhaften Ausführungsbeispiel ist das Lagerelement als hohlzylindrische Lagerbuchse ausgebildet und weist eine Mantelfläche auf, die in formschlüssiger Verbindung mit dem Verzahnungselement steht, wobei in der Mantelfläche mindestens eine Durchgangsöffnung ausgebildet ist. Dabei steht die Durchgangsöffnung vorteilhafterweise in fluidischer Verbindung mit dem Schmiermittelkanal. Dadurch kann Schmiermittel, das beispielsweise über eine feststehende Achse, die von der Lagerbuchse aufgenommen wird, in Richtung der Schmiermittelkanäle eingebracht werden. Da das Lagerelement formschlüssig mit dem Verzahnungselement ausgebildet ist, kann gewährleistet werden, dass die Durchgangsöffnungen in der Lagerbuchse immer fluidisch mit einem Schmiermittelkanal verbunden sind, so dass in jeder Position des Schmierritzelmoduls Schmiermittel durch mindestens einen Schmiermittelkanal abströmen kann. Dadurch kann es zu keiner Zeit zu einer sogenannten Sperrstellung kommen, in der Schmiermittel nicht aus der Achse in Richtung Schmiermittelkanal abführbar ist.

Dabei ist insbesondere vorteilhaft, wenn die für die Ausbildung der Schmiermittelkanäle benötigten Platzhalter während dem formschlüssigen Verbinden zwischen Lagerelement und Verzahnungselement derart angeordnet werden, dass sie in Flucht mit den Durchgangsöffnungen stehen, wodurch sichergestellt werden kann, dass die Schmiermittelkanäle direkt in fluidischer Verbindung mit den Durchgangsöffnungen stehen.

Gemäß einem weiteren vorteilhaften Ausführungsbeispiel ist das Lagerelement aus einem formstabilen und/oder reibungsarmen Material, insbesondere aus einem Kunststoff, vorzugsweise Polyamid, oder einem Metall, vorzugsweise Aluminium, gefertigt. Dabei ist insbesondere vorteilhaft, wenn das Lagerelement vorgefertigt ausgebildet ist, da dann das vorgefertigte Lagerelement besonders gut in das Verzahnungselement eingegossen werden kann.

Gemäß einem weiteren Aspekt vorliegender Erfindung wird ein Schmierritzel vorgestellt, das mindestens ein derartiges Schmierritzelmodul aufweist. Durch diese modulare Ausgestaltung ist es möglich, Schmierritzel mit axial unterschiedlichen Breiten lediglich mittels der Anzahl der auf der Achse angeordneten Schmierritzelmodule zu realisieren. Dadurch wiederum können vorteilhafterweise die Lagerhaltungskosten reduziert werden.

Ein weiterer vorteilhafter Aspekt vorliegender Erfindung betrifft ein Verfahren zum Herstellen eines Schmierritzelmoduls, wie oben beschrieben, wobei das Schmierritzelmodul ein Lagerelement und ein Verzahnungselement aufweist und das Lagerelement und das Verzahnungselement formschlüssig, insbesondere mittels eines Guss-, Spritz- oder Spritzgussverfahrens, miteinander verbunden werden. Dadurch kann ein Schmierritzelmodul bereitgestellt werden, das zum einen schnell und einfach zu fertigen ist und zum anderen für hohe Umdrehungszahlen ausgelegt ist und aufgrund der eingegossenen Schmiermittelkanäle eine höhere Dichtigkeit als gefertigte Schmiermittelkanäle aufweist. Weitere Verfahrensschritte wurden bereits in dem obigen Text offenbart oder ergeben sich zwangsläufig aus der entsprechenden Beschreibung des Schmierritzelmoduls.

Weitere Vorteilhaft und vorteilhafte Ausgestaltungen sind in den Ansprüchen, der Beschreibung und den Zeichnungen definiert.

Im Folgenden soll die Erfindung anhand eines in der Zeichnung dargestellten Ausführungsbeispiels näher beschrieben werden. Dabei ist das Ausführungsbeispiel rein exemplarischer Natur und soll nicht den Schutzbereich der Anmeldung definieren. Dieser wird allein durch die anhängigen Ansprüche festgelegt.

Es zeigen:
Fig. 1: eine schematische Schnittansicht entlang der Längsachse durch ein bevorzugtes Ausführungsbeispiel des erfmdungsgemäßen Schmierritzels; und
Fig. 2: eine schematische radiale Schnittansicht durch das in Fig. 1 gezeigte Schmierritzelmodul.

Im Folgenden werden gleiche oder funktionell gleichwirkende Elemente mit denselben Bezugszeichen gekennzeichnet.

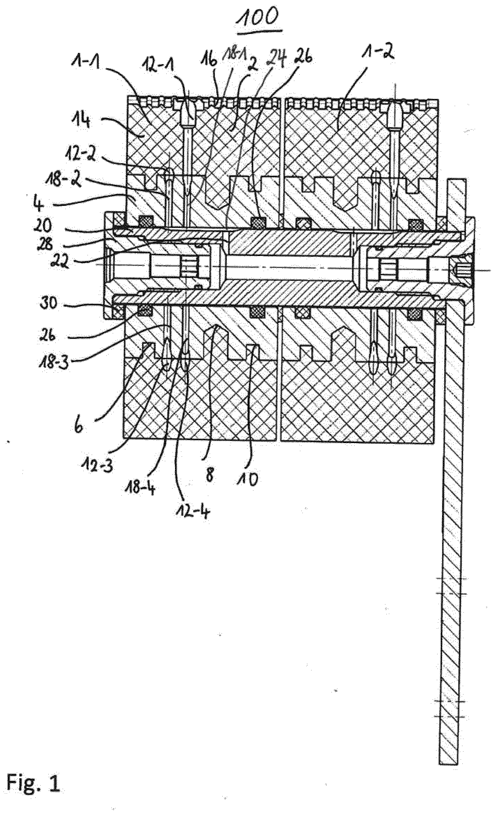

Fig. 1 zeigt schematisch eine Schnittansicht entlang einer Längsachse durch ein bevorzugtes Ausführungsbeispiel eines erfindungsgemäßen Schmierritzels 100, das in dem dargestellten Ausführungsbeispiel zwei Schmierritzelmodule 1-1 und 1-2 umfasst. Erfindungsgemäß umfasst dabei jedes Schmierritzelmodul 1 ein Verzahnungselement 2 und ein Lagerelement 4, wobei das Lagerelement 4 in das Material des Verzahnungselements formschlüssig eingebettet, insbesondere eingegossen ist. Dazu sind an dem Lagerelement 4 Aussparungen 6, 8, 10 ausgebildet, in die das Material des Verzahnungselements eindringen kann und so für eine formschlüssige Verbindung sorgt. Dabei können die Aussparungen 6, 8, 10 unterschiedliche Formen aufweisen, und wie beispielsweise die Aussparung 8 zeigt, als Bohrung ausgebildet sein, die umfänglich verteilt angeordnet ist. Dadurch kann sichergestellt werden, dass zwischen Verzahnungselement 2 und Lagerelement 4 keine oder nur eine sehr geringe Relativbewegung auftreten kann. Die Aussparungen können auch als sich zumindest teilweise umfänglich erstreckende Nuten 6, 10 ausgebildet sein, wodurch insbesondere eine zusätzliche Abdichtung zwischen Lagerelement 4 und Verzahnungselement 2 geschaffen wird.
Weiterhin zeigt Fig. 1, dass in dem Verzahnungselement 2 mehrere Schmiermittelkanäle 12-1, 12-2, 12-3, 12-4 ausgebildet sind, die ebenfalls während des Herstellungsprozesses des Verzahnungselements 2 eingegossen werden. Die Schmiermittelkanäle 12 erstrecken sich dabei im Wesentlichen radial von einem Inneren des Schmierritzelmoduls zu einer Zahnflanke 14 des Verzahnungselements 2, so dass das Schmiermittel nicht direkt am Zahnkopf 16, sondern seitlich versetzt an den Zahnflanken austreten kann. Dadurch wird eine besonders gute Schmierung bereitgestellt.
Radial innen stehen die Schmiermittelkanäle 12 in fluidischer Verbindung mit Durchgangsöffnungen 18-1, 18-2, 18-3, 18-4, die in dem Lagerelement 4 ausgebildet sind. Diese fluidische Verbindung kann bereits während der Ausbildung des Verzahnungselements 2 hergestellt werden, indem Platzhalterelemente (nicht dargestellt), die die Aussparungen für den Schmiermittelkanal 12 bereitstellen, während des Herstellungsverfahrens des Verzahnungsbereichs direkt in die Durchgangsöffnungen 18 des Lagerelements 4 gesteckt werden und nach der Herstellung des Verzahnungselements 2 wieder entfernt werden.

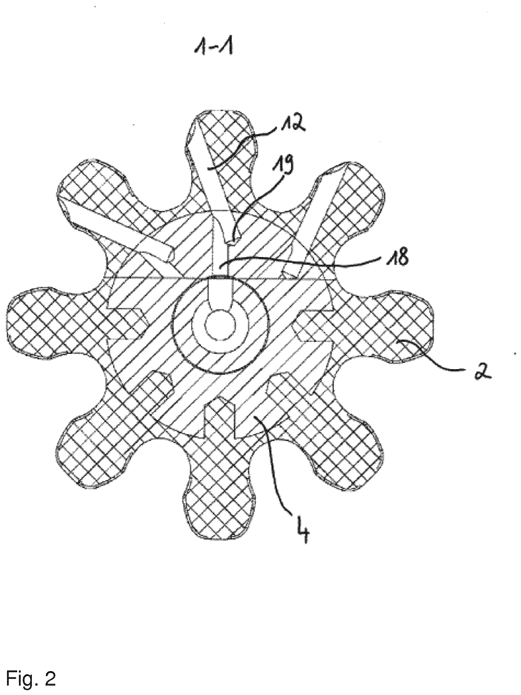

Dies wird insbesondere aus der radialen Schnittansicht der Fig. 2 deutlich. Hier ist gut zu sehen, dass die Durchgangsöffnungen 18 fluidisch mit den Schmiermittelkanälen 12 verbunden sind. Weiterhin ist zu sehen, dass für das Einstecken der Platzhalterelemente (nicht dargestellt) in dem Lagerelement extra Aufnahmetaschen 19 ausgebildet sein können, die für eine besonders gute und sichere Aufnahme der Platzhalterelemente sorgen.

Weiterhin zeigt Fig. 1, dass in dem Lagerelement 4 eine Achse 20 aufnehmbar ist, über die Schmiermittel zuführbar ist. Auf dieser Achse 20 ist das Schmierritzel 100 drehbar gelagert. Der Einfachheit halber wird die Schmiermittelführung auch hier in Bezug auf das Schmiermittelmodul 1-1 besprochen. Das Schmierritzelmodul 1-2 ist dabei analog ausgebildet. Um Schmiermittel aus der Achse 20 an das Schmierritzelmodul 1-1 zu transportieren, weist die Achse 20 weiterhin eine Öffnung 22 auf, die in eine Aussparung 24, insbesondere einem Langloch, mündet, von wo aus Schmiermittel an die jeweiligen Durchgangsöffnungen 18, hier Durchgangsöffnungen 18-1, 18-2, und Schmiermittelkanäle 12, hier Schmiermittelkanäle 12-1, 12-2, transportierbar ist.

Dabei ist die Aussparung 24 derart ausgestaltet, dass immer eine Verzahnung, d.h. ein Zahnkopf mit, wie hier dargestellt, zwei Schmiermittelkanälen mit Schmiermittel versorgt wird. Dadurch kann sichergestellt werden, dass Schmiermittel jeweils immer nur in die Schmiermittelkanäle abgegeben wird, die gerade mit dem zu schmierenden Element in Kontakt stehen. Dabei können aber auch mehrere Aussparungen 24 an der Achse 20 vorgesehen sein, falls mehrere zu schmierende Elemente gleichzeitig mit Schmiermittel versorgt werden sollen.

Eine Abdichtung der Achse 20 und des Lagerelements 4 wird über Dichtringe 26 bereitgestellt. Weiterhin zeigt Fig. 1, dass in der Achse 20, beispielsweise zum Anschluss einer Schmiermittelleitung, ein Adapter 28 aufgenommen werden kann, der sich über Gleitscheiben 30 an dem Lagerelement 4 abstützt. Dabei ist üblicherweise die Achse 20 feststehend ausgebildet und nur das Schmierritzel 100 dreht sich um die Achse 20. Weiterhin kann man Fig. 1 entnehmen, dass die Schmierritzelmodule 1-1 und 1-2 unabhängig voneinander drehbar gelagert sein können.

Neben den zwei Schmierritzelmodulen 1-1, 1-2 können auch noch weitere Schmierritzelmodule auf der Achse 20 aufgenommen werden. Durch diese modulare Ausgestaltung ist es möglich Schmierritzel 100 mit axial unterschiedlichen Breiten lediglich über die Anzahl der auf der Achse angeordneten Schmierritzelmodule 1-1, 1-2 zu realisieren. Dadurch wiederum können vorteilhafterweise die Lagerhaltungskosten reduziert werden. Je nach Anwendung ist dann lediglich die Achse 20 mit einer entsprechenden Anzahl an Öffnungen 22 und Aussparungen 24 zu versehen, um eine entsprechende Anzahl von Schmierritzelmodulen mit Schmiermittel zu versehen.

Aufgrund der neuen und erfindungsgemäßen Ausgestaltung des Schmierritzelmoduls entfallen die bei den üblichen aus zwei Teilbereichen bestehenden Schmierritzelmodulen kritischen Dichtflächen. Durch die neue Kanalführung kann zudem ein einstückiges Schmierritzelmodul alleine zum Einsatz gebracht werden, da kein Gegenstück zum Abdichten der Schmiermittelkanalführung benötigt ist. Außerdem kann durch das direkte Vergießen des Lagerelements beim eigentlichen Herstellungsprozess auch eine Dichtung zwischen Lagerelement und Verzahnungselement bereitgestellt werden, so dass auch hier eine weitere mögliche Undichtigkeitsstelle eliminiert wird, da sich das Material des Schmierritzelmoduls fest mit dem des Lagerelements verbindet. Dadurch wird ermöglicht, dass das neue und erfindungsgemäße Schmierritzelmodul einen deutlich höheren Systemdruck aushält als herkömmliche Schmierritzel. Da die Schmiermittelkanäle nicht mehr gebaut ausgebildet sind, entfallen auch weitere Befestigungselemente, wie Scheiben, Stützhülsen oder Schrauben, so dass die Herstellung insgesamt einfacher ist. Zudem können an einer Welle mehrere, auch unabhängig voneinander rotierende Schmierritzelmodule angeordnet werden. Da zudem die Schmiermittelkanäle in dem Lagerelement und damit auch die Schmiermittelkanäle in dem Verzahnungselement in Verbindung mit einer Auslassgeometrie an der Achse aufeinander abgestimmt ausgestaltet werden können, ist zu keiner Zeit eine sogenannte Sperrstellung möglich. Dadurch kann immer gewährleistet sein, dass Schmierstoff durch mindestens einen Schmierstoffkanal abströmen kann.

### Bezugszeichenliste

- 100: Schmierritzel
- 1-1, 1-2: Schmierritzelmodul
- 2: Verzahnungselement
- 4: Lagerelement
- 6, 8, 10: Aussparungen
- 12: Schmiermittelkanal
- 14: Zahnflanke
- 16: Zahnkopf
- 18: Durchgangsbohrung im Lagerelement
- 19: Aufnahmetaschen
- 20: Achse
- 22: Schmiermittelauslassbohrung
- 24: Aussparung, Langloch in Achse
- 26: Dichtring
- 28: Adapter
- 30: Gleitscheibe

## Patentansprüche

1. Schmierritzelmodul (1), insbesondere für eine Schmiereinrichtung, zum Aufbringen eines Schmiermittels auf ein zu schmierendes Element, insbesondere ein Zahnrad, wobei das Schmierritzelmodul (1) ein Verzahnungselement (2) und ein Lagerelement (4) aufweist, wobei das Verzahnungselement (2) dazu ausgelegt ist, das zu schmierende Element mit Schmierstoff zu versorgen und das Lagerelement (4) dazu ausgelegt ist, das Schmierritzelmodul (1) auf einer Welle zu lagern, wobei das Lagerelement (4) und das Verzahnungselement (2) drehfest miteinander verbunden sind, **dadurch gekennzeichnet, dass** das Lagerelement (4) mindestens eine, vorzugsweise mehrere, Aussparungen (6; 8; 10) aufweist, die dazu ausgelegt sind, eine formschlüssige Verbindung mit dem Verzahnungselement (2) bereitzustellen, und wobei die mindestens eine Aussparung (6; 8; 10) des Lagerelements (4) formschlüssig mit einem für eine Herstellung des Verzahnungselements (2) verwendeten Material gefüllt ist.

2. Schmierritzelmodul (1) nach Anspruch 1, wobei das Verzahnungselement (2) dazu ausgelegt ist, das Lagerelement (4) mittels eines das Verzahnungselement (2) herstellenden Verfahrens, insbesondere eines Gussverfahrens, eines Spritzverfahrens oder eines Spritzgussverfahrens, zu umschließen.

3. Schmierritzelmodul (1) nach Anspruch 1 oder 2, wobei die Aussparung (6; 8; 10) als Bohrung, insbesondere Sackbohrung (8), oder als Nut (6; 10) ausgebildet ist.

4. Schmierritzelmodul (1) nach einem der vorhergehenden Ansprüche, wobei das Verzahnungselement (2) einstückig ausgebildet ist, und vorzugsweise mindestens eine Verzahnung mit einem Zahnkopf (16) und zwei den Zahnkopf (16) umfänglich begrenzenden Zahnflanken (14) aufweist.

5. Schmierritzelmodul (1) nach Anspruch 4, wobei in dem Verzahnungselement (2), insbesondere in der Verzahnung, mindestens ein im Wesentlichen radial verlaufender Schmiermittelkanal (12) vorgesehen ist, wobei vorzugsweise der Schmiermittelkanal (12) mindestens einen in einer der Zahnflanken (14) ausgebildeten Schmiermittelauslass aufweist.

6. Schmierritzelmodul (1) nach einem der vorhergehenden Ansprüche, wobei das Verzahnungselement (2) aus einem in einem Gussverfahren, Spritzverfahren, oder Spritzgussverfahren verarbeitbaren Material, insbesondere einem Kunststoff, vorzugsweise Polyurethan hergestellt ist.

7. Schmierritzelmodul (1) nach Anspruch 5 und 6, wobei der mindestens eine Schmiermittelkanal (12) während des Gussverfahrens, Spritzverfahrens, oder Spritzgussverfahrens ausgebildet ist.

8. Schmierritzelmodul (1) nach Anspruch 5 oder 7, wobei das Lagerelement (4) mindestens eine Durchgangsöffnung (18) aufweist, die in fluidischer Verbindung mit dem Schmiermittelkanal (12) ausgebildet ist, wobei vorzugsweise das Lagerelement (4) als hohlzylindrische Lagerbuchse ausgebildet ist und eine Mantelfläche aufweist, die in formschlüssiger Verbindung mit dem Verzahnungselement (2) steht, und in der die mindestens eine Durchgangsöffnung (18) ausgebildet ist.

9. Schmierritzelmodul (1) nach einem der vorhergehenden Ansprüche, wobei das Lagerelement (4) aus einem formstabilen und/oder reibungsarmen Material, insbesondere aus einem Kunststoff, vorzugsweise Polyamid, oder einem Metall, vorzugsweise Aluminium hergestellt ist, wobei vorzugsweise das Lagerelement (4) vorgefertigt ist.

10. Schmierritzel (100), insbesondere für eine Schmiereinrichtung, zum Aufbringen eines Schmiermittels auf ein zu schmierendes Element, insbesondere ein Zahnrad, wobei das Schmierritzel (100) mindestens ein Schmierritzelmodul (1) nach einem der vorhergehenden Ansprüche aufweist.

## Claims

1. Lubricating pinion module (1), in particular for a lubricating device, for applying a lubricant to an element to be lubricated, in particular a gear wheel, the lubricating pinion module (1) comprising a toothing element (2) and a bearing element (4), wherein the toothing element (2) is designed to supply the element to be lubricated with lubricant, and the bearing element (4) is designed to mount the lubricating pinion module (1) on a shaft, wherein the bearing element (4) and the toothing element (2) are connected to each other for conjoint rotation, **characterized in that** the bearing element (4) has at least one, preferably multiple, recesses (6; 8; 10), which are designed to provide a form-fitting connection with the toothing element (2), and wherein the at least one recess (6; 8; 10) of the bearing element (4) is filled in a form-fitting manner with a material used for producing the toothing element (2).

2. Lubricating pinion module (1) according to Claim 1, wherein the toothing element (2) is designed to enclose the bearing element (4) by means of a method for producing the toothing element (2), in particular a casting method, an injection method or an injection-moulding method.

3. Lubricating pinion module (1) according to Claim 1 or 2, wherein the recess (6; 8; 10) is formed as a hole, in particular a blind hole (8), or as a groove (6; 10).

4. Lubricating pinion module (1) according to one of the preceding claims, wherein the toothing element (2) is formed in one piece, and preferably has at least one toothing with a tooth head (16) and two tooth flanks (14) circumferentially bordering the tooth head (16).

5. Lubricating pinion module (1) according to Claim 4, wherein at least one substantially radially extending lubricant channel (12) is provided in the toothing element (2), in particular in the toothing, wherein the lubricant channel (12) preferably has at least one lubricant outlet formed in one of the tooth flanks (14).

6. Lubricating pinion module (1) according to one of the preceding claims, wherein the toothing element (2) is produced from a material that can be processed in a casting method, an injection method or an injection-moulding method, in particular plastic, preferably polyurethane.

7. Lubricating pinion module (1) according to Claims 5 and 6, wherein the at least one lubricant channel (12) is formed during the casting method, injection method or injection-moulding method.

8. Lubricating pinion module (1) according to Claim 5 or 7, wherein the bearing element (4) has at least one through-opening (18), which is formed in fluid connection with the lubricant channel (12), wherein the bearing element (4) is preferably formed as a hollow-cylindrical bearing bush and has an outer surface which is in a form-fitting connection with the toothing element (2), and in which the at least one through-opening (18) is formed.

9. Lubricating pinion module (1) according to one of the preceding claims, wherein the bearing element (4) is produced from a dimensionally stable and/or low-friction material, in particular from a plastic, preferably polyamide, or a metal, preferably aluminium, wherein the bearing element (4) is preferably prefabricated.

10. Lubricating pinion (100), in particular for a lubricating device, for applying a lubricant to an element to be lubricated, in particular a gear wheel, wherein the lubricating pinion (100) has at least one lubricating pinion module (1) according to one of the preceding claims.

## Revendications

1. Module de pignon de lubrification (1), en particulier pour un système de lubrification, destiné à amener du lubrifiant sur un élément à lubrifier, en particulier une roue dentée, dans lequel le module de pignon de lubrification (1) présente un élément de denture (2) et un élément de palier (4), dans lequel l'élément de denture (2) est conçu pour alimenter l'élément à lubrifier en lubrifiant et l'élément de palier (4) est conçu pour supporter le module de pignon de lubrification (1) sur un arbre, dans lequel l'élément de palier (4) et l'élément de denture (2) sont assemblés l'un à l'autre de façon calée en rotation, **caractérisé en ce que** l'élément de palier (4) présente au moins une, de préférence plusieurs découpe(s) (6; 8; 10), qui sont conçues pour fournir un assemblage par emboîtement avec l'élément de denture (2), et dans lequel ladite au moins une découpe (6; 8; 10) de l'élément de palier (4) est remplie par emboîtement avec un matériau utilisé pour la fabrication de l'élément de denture (2).

2. Module de pignon de lubrification (1) selon la revendication 1, dans lequel l'élément de denture (2) est conçu pour entourer l'élément de palier (4) au moyen d'un procédé de fabrication de l'élément de denture (2), en particulier un procédé de coulée, un procédé d'injection ou un procédé de moulage par injection.

3. Module de pignon de lubrification (1) selon la revendication 1 ou 2, dans lequel la découpe (6; 8; 10) est réalisée sous la forme d'un perçage, en particulier d'un trou borgne (8), ou d'une rainure (6; 10).

4. Module de pignon de lubrification (1) selon l'une quelconque des revendications précédentes, dans lequel l'élément de denture (2) est réalisé en une seule pièce, et présente de préférence au moins une denture avec une tête de dent (16) et deux flancs de dent (14) limitant en périphérie la tête de dent (16).

5. Module de pignon de lubrification (1) selon la revendication 4, dans lequel il est prévu dans l'élément de denture (2), en particulier dans la denture, au moins un canal de lubrifiant (12) s'étendant essentiellement radialement, dans lequel le canal de lubrifiant (12) présente de préférence au moins une sortie de lubrifiant formée dans un des flancs de dent (14).

6. Module de pignon de lubrification (1) selon l'une quelconque des revendications précédentes, dans lequel l'élément de denture (2) est fabriqué en un matériau apte à une mise en oeuvre par un procédé de coulée, un procédé d'injection ou un procédé de moulage par injection, en particulier une matière plastique, de préférence un polyuréthane.

7. Module de pignon de lubrification (1) selon la revendication 5 et 6, dans lequel ledit au moins un canal de lubrifiant (12) est formé pendant le procédé de coulée, le procédé d'injection ou le procédé de moulage par injection.

8. Module de pignon de lubrification (1) selon la revendication 5 ou 7, dans lequel l'élément de palier (4) présente au moins une ouverture de passage (18), qui est réalisée en communication fluidique avec le canal de lubrifiant (12), dans lequel l'élément de palier (4) est réalisé de préférence sous forme de coussinet de palier cylindrique creux et présente une face latérale, qui est en liaison par emboîtement avec l'élément de denture (2), et dans laquelle ladite au moins une ouverture de passage (18) est formée.

9. Module de pignon de lubrification (1) selon l'une quelconque des revendications précédentes, dans lequel l'élément de palier (4) est fabriqué en un matériau de forme stable et/ou à frottement faible, en particulier en une matière plastique, de préférence en polyamide, ou en un métal, de préférence en aluminium, dans lequel l'élément de palier (4) est de préférence préfabriqué.

10. Pignon de lubrification (100), en particulier pour un système de lubrification, destiné à amener un lubrifiant sur un élément à lubrifier, en particulier une roue dentée, dans lequel le pignon de lubrification (100) présente au moins un module de pignon de lubrification (1) selon l'une quelconque des revendications précédentes.
